# EUROPÄISCHE PATENTSCHRIFT

(11) **EP 4 401 995 B1**
(45) Veröffentlichungstag und Bekanntmachung des Hinweises auf die Patenterteilung: **26.03.2025**
(21) Anmeldenummer: 22792781.1
(22) Anmeldetag: 16.09.2022
(51) Int. Cl.: B60H 1/00, F25B 45/00, F17C 7/02

(54) **BEFÜLLVORRICHTUNG FÜR EINE KLIMAANLAGE**
FILLING DEVICE FOR AN AIR CONDITIONING SYSTEM
DISPOSITIF DE REMPLISSAGE POUR INSTALLATION DE CLIMATISATION

(30) Priorität: 17.09.2021 AT 507332021
(43) Veröffentlichungstag der Anmeldung: 24.07.2024
(73) Patentinhaber: AVL DiTest GmbH, 8020 Graz (AT)
(72) Erfinder: STUPNIK, Axel, 8010 Graz (AT); MUCHITSCH, Dietmar, 8020 Graz (AT); IVANTSITS, Benjamin, 8045 Graz (AT)
(74) Vertreter: Patentanwälte Pinter & Weiss OG
(86) Internationale Anmeldenummer: PCT/EP2022/075734
(87) Internationale Veröffentlichungsnummer: WO 2023/041688

(56) Entgegenhaltungen:
- EP-A1- 1 143 213
- DE-B4- 112005 001 670
- US-A1- 2006 101 835
- US-A1- 2008 264 072

## Beschreibung

Die Erfindung betrifft eine Befüllvorrichtung zur Durchführung eines Befüllvorgangs einer Klimaanlage eines Fahrzeugs mit einem Kältemittel, wobei in der Befüllvorrichtung ein Aufnahmebereich zur Aufnahme eines mit dem Kältemittel gefüllten Druckbehälters, eine mit einem Auslass des Druckbehälters verbindbare Ventileinheit zum Steuern einer dem Fahrzeug zuführbaren Kältemittelmenge und eine Heizeinrichtung zum Erhitzen des Druckbehälters vorgesehen sind. Die Erfindung betrifft zudem ein Verfahren zur Durchführung eines Befüllvorgangs einer Klimaanlage eines Fahrzeugs mit einem Kältemittel, wobei das Kältemittel dem Fahrzeug aus einem Druckbehälter zugeführt wird, wobei eine zugeführte Kältemittelmenge über eine mit einem Auslass des Druckbehälters verbundene Ventileinheit gesteuert wird und wobei der Druckbehälter erhitzt wird, um einen Druck im Druckbehälter zu erhöhen.

Beim Füllen einer Klimaanlage eines Fahrzeugs wird üblicherweise ein Kältemittel aus einem Druckbehälter unter kontrollierten Bedingungen in die Klimaanlage gefördert. In der Regel werden dazu aus Kostengründen keine Pumpen verwendet, sondern es wird der Druckbehälter erhitzt, um den Innendruck zu erhöhen. Dadurch kann eine ausreichende Druckdifferenz erzeugt werden, durch die das Kältemittel vom Druckbehälter zur Klimaanlage strömt. Bei bekannten Befüllvorrichtungen wird der Druckbehälter auf eine maximale Temperatur im Bereich von 55°C erhitzt und der Druck wird derzeit auf ca. 85 bar begrenzt. Bei R744-Anlagen wird als Kältemittel beispielsweise Kohlendioxid (CO₂) verwendet, das in einem austauschbaren Druckbehälter gelagert wird. Als Druckbehälter kommen in der Regel genormte Druckflaschen zum Einsatz, die typischerweise eine Menge von 5 kg bis 20 kg oder mehr des Kältemittels CO₂ enthalten können.

Bisher erfolgte die Erhitzung des Druckbehälters meist mit einer elektrischen Heizmatte, die um den Druckbehälter herum angelegt wird und die mit Haushaltsstrom betrieben werden kann. In der Heizmatte können ein Temperatursensor und ein zusätzlicher temperaturabhängiger Sicherheitsschalter integriert sein. Die Verwendung einer Heizmatte hat allerdings einige Nachteile. Zum einen handelt es sich dabei um eine relativ teure Lösung, was dem Ziel widerstrebt, eine kostengünstige Befüllvorrichtung bereitzustellen. Zum anderen ist der Behälterwechsel dadurch aufwändig und zeitintensiv, da es bei jedem Wechsel des Druckbehälters notwendig ist, die Heizmatte zunächst vom leeren Druckbehälter abzunehmen und danach auf den neuen, vollen Druckbehälter wieder anzulegen. Weiters besteht dabei auch die Gefahr, dass eine unsachgemäße Handhabung der Heizmatte beim Behälterwechsel (z.B. schlechte thermische Verbindung zwischen der Oberfläche der Heizmatte und der Oberfläche des Druckbehälters) zu Fehlern führt, die sich unter Umständen negativ auf die Füll-Genauigkeit auswirken können oder zu einem Verlust der Heizleistung führen können. Ganz allgemein ergibt sich aufgrund der aus Sicherheitsgründen erforderlichen thermischen und elektrischen Isolation der Heizmatte generell nur eine mäßige Heizleistung, was im Betrieb ebenfalls nachteilig für ein effizientes und rasches Erhitzen des Druckbehälters ist.

Aus der US 2006/0101835 A1 ist ein Füllsystem zum Befüllen eines Kühlsystems für ein Fahrzeug bekannt, welches ein Steuergerät, eine Kühlmittelquelle und mindestens eine Leitung aufweist, die die Kühlmittelquelle mit dem Kühlsystem verbindet. Weiters ist ein Steuerventil vorgesehen, das den Fluss eines Kühlmittels von der Kühlmittelquelle zum Kühlsystem regelt, sowie ein Effizienzsensor zum Messen der Effizienz des Kühlsystems, wobei zuerst bei einer Kühlmittelfüllmenge, welche unter einer empfohlenen Kühlmittelfüllmenge liegt, eine Basis-Effizienz des Kühlsystems gemessen wird, und nach Befüllen mit einer zusätzlichen Menge an Kältemittel die Effizienz nochmals bestimmt und mit der Basis-Effizienz verglichen wird.

Die DE 11 2005 001 670 B4 zeigt ebenfalls ein Kühlmittelfüllsystem sowie ein Verfahren zum Füllen eines Kühlsystems. Dazu umfasst das Kühlmittelsystem eine Kühlmittelquelle, einen Speicherbehälter, einen Einlass- und Auslassleitung sowie eine Vorrichtung zum Ermitteln der Kühlmittelmasse im Inneren des Speicherbehälters. Weiters umfasst das Kühlmittelsystem ein Einlasssteuerventil zwischen Speicherbehälter und Kühlmittelquelle und ein Auslasssteuerventil zwischen Speicherbehälter und Kühlsystem sowie eine mit der Kühlmittelquelle verbundene Heizvorrichtung, um die Kühlmitteltemperatur zu erhöhen.

Weiterhin zeigen auch die EP 1 143 213 A1 sowie die US 2008/0264072 A1 eine Befüllvorrichtung für Kraftfahrzeugklimaanlagen bzw. eine Flüssiggas-Zuführvorrichtung sowie eine Zuführverfahren.

Es ist daher eine Aufgabe der Erfindung, eine einfachere und effizientere Durchführung von Befüllvorgängen von Klimaanlagen von Fahrzeugen zu ermöglichen.

Die Aufgabe wird mit der eingangs genannten Befüllvorrichtung erfindungsgemäß dadurch gelöst, dass die Heizeinrichtung zumindest ein Infrarot-Heizeinheit aufweist, um den Druckbehälter berührungslos zu erhitzen. Die Aufgabe wird zudem mit dem eingangs genannten Verfahren dadurch gelöst, dass der Druckbehälter mittels zumindest einer Infrarot-Heizeinheit berührungslos erhitzt wird. Dadurch ist einerseits eine effizientere Erhitzung des Druckbehälters durch Strahlungswärme möglich und zum anderen kann der Behälterwechsel wesentlich einfacher und schneller erfolgen. Weiters ist im Vergleich zu Heizmatten keine Erdung der Infrarot-Heizeinheit und des Druckbehälters notwendig.

In der Befüllvorrichtung ist vorzugsweise eine Steuerungseinheit zur Steuerung des Befüllvorgangs vorgesehen. Dadurch kann der Befüllvorgang automatisch durchgeführt werden.

Im Aufnahmebereich kann optional eine Waage zur Messung eines Gewichts des Druckbehälters vorgesehen sein. Dadurch kann ein Gewicht des Druckbehälters während des Befüllvorgangs gemessen werden und anhand des gemessenen Gewichts die zugeführte Kältemittelmenge gesteuert werden. Dadurch kann der Befüllvorgnag mir einer vorgegebenen Füllmenge durchgeführt werden.

In der der Befüllvorrichtung ist in vorteilhafter Weise zumindest ein Drucksensor zur Erfassung eines Drucks des Kältemittels vorgesehen und/oder es ist zumindest ein Temperatursensor zur Erfassung einer Temperatur des Druckbehälters und/oder der Heizeinrichtung und/oder des Kältemittels vorgesehen. Dadurch können Druck und Temperatur überwacht werden und die Heizeinrichtung und/oder die Ventileinheit können in Abhängigkeit von Druck und Temperatur gesteuert werden.

In der Befüllvorrichtung können auch mehrere Infrarot-Heizeinheiten vorgesehen sein, die vorzugsweise um einen Umfang des Aufnahmebereichs verteilt angeordnet sind. Dadurch kann eine größere Heizfläche realisiert werden, wodurch insbesondere bei Druckbehältern mit größerem Durchmesser eine effizientere Erhitzung ermöglicht wird.

Es kann vorteilhaft sein, wenn in der Befüllvorrichtung, an einer dem Aufnahmebereich abgewandten Seite zumindest einer Infrarot-Heizeinheit, eine Abschirmeinheit vorgesehen ist, wobei die Abschirmeinheit die Infrarot-Heizeinheit in Umfangsrichtung vorzugsweise zumindest zur Hälfte umgibt. Dadurch kann einerseits die Wärmestrahlung besser in Richtung des Druckbehälters gerichtet werden und es können zudem sensible Komponenten der Befülleinrichtung vor Überhitzung geschützt werden.

Vorzugsweise ist zumindest eine Infrarot-Heizeinheit länglich ausgebildet und so in der Befüllvorrichtung angeordnet, dass seine Längsachse parallel zu einer Hochachse eines im Aufnahmebereich stehend angeordneten Druckbehälters verläuft. Dadurch kann der Druckbehälter über einen möglichst großen Teil seiner Höhe beheizt werden.

An der Befüllvorrichtung kann auch eine mit der Steuerungseinheit verbundene Benutzerschnittstelle vorgesehen sein, über welche Steuerungsparameter des Befüllvorgangs einstellbar sind, insbesondere eine der Klimaanlage zuführbare Kältemittelmenge und/oder eine Fülldauer. Dadurch wird eine einfache Bedienbarkeit der Befüllvorrichtung ermöglicht.

Die Befüllvorrichtung kann auch als mobile Befüllvorrichtung ausgebildet sein, wobei an einer Unterseite der Befüllvorrichtung Räder angeordnet sein können und/oder wobei in der Befüllvorrichtung ein Energiespeicher vorgesehen sein kann, um die Befüllvorrichtung zur Durchführung zumindest eines Befüllvorgangs mit Energie zu versorgen. Dadurch kann die Befüllvorrichtung z.B. in einer Werkstätte einfach zwischen Fahrzeugen bewegt werden und der Befüllvorgang kann energieautark erfolgen.

Es kann auch vorteilhaft sein, wenn zumindest eine Infrarot-Heizeinheit relativ zum Aufnahmebereich translatorisch und/oder rotatorisch beweglich angeordnet ist. Dadurch können z.B. ein Abstand und/oder ein Winkel zwischen zumindest einer Infrarot-Heizeinheit und dem Druckbehälter verändert werden, beispielsweise um unabhängige vom verwendeten Druckbehälter einen konstanten Abstand einzustellen. Das kann insbesondere bei der Verwendung von Druckbehältern verschiedener Größe vorteilhaft sein.

Der Aufnahmebereich ist vorzugsweise zur Aufnahme von Druckbehältern mit einem zylindrischen Flaschenkörper mit einem Flaschendurchmesser von 15cm bis 40cm ausgebildet. Dadurch können gängige genormte Druckflaschen in der Befüllvorrichtung verwendet werden.

Als Kältemittel wird vorzugsweise Kohlendioxid verwendet. Dadurch kann die Befüllvorrichtung bzw. das Verfahren für sogenannte R-744-Klimaanlagen verwendet werden.

Die gegenständliche Erfindung wird nachfolgend unter Bezugnahme auf die Figuren 1 bis 2 näher erläutert, die beispielhaft, schematisch und nicht einschränkend vorteilhafte Ausgestaltungen der Erfindung zeigen. Dabei zeigt
Fig.1 den grundlegenden Aufbau einer Befüllvorrichtung zur Durchführung eines Befüllvorgangs einer Klimaanlage eines Fahrzeugs, und
Fig.2 eine Befüllvorrichtung zur Durchführung eines Befüllvorgangs einer Klimaanlage eines Fahrzeugs gemäß einer bevorzugten Ausführungsform der Erfindung.

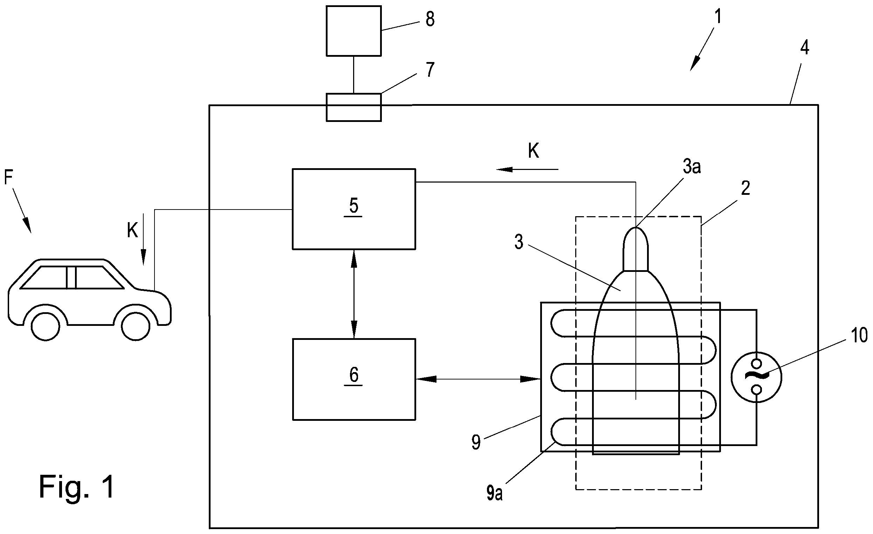

Fig.1 zeigt schematisch den grundlegenden Aufbau einer Befüllvorrichtung 1 zur Durchführung eines Befüllvorgangs einer Klimaanlage eines Fahrzeugs F. Die Befüllvorrichtung 1 weist einen Aufnahmebereich 2 zur Aufnahme eines mit dem Kältemittel K, beispielsweise Kohlendioxid (CO₂), gefüllten Druckbehälters 3 auf. Der Aufnahmebereich 2 ist in Fig.1 nur schematisch durch die strichlierte Umrandung des Druckbehälters 3 angedeutet und kann im Wesentlichen beliebig ausgeführt sein. Wesentlich ist lediglich, dass der Aufnahmebereich 2 zur Aufnahme eines Druckbehälters 3 geeignet ist, vorzugsweise zur Aufnahme von Druckbehältern 3 verschiedener Größe (z.B. Höhe und/oder Durchmesser). In einer einfachen Ausführungsform kann der Aufnahmebereich 2 beispielsweise lediglich eine Platte zum Abstellen des Druckbehälters 3 umfassen. Der Aufnahmebereich 2 kann aber auch so ausgebildet sein, dass der Druckbehälter 3 teilweise oder vollständig von einem Gehäuse 4 der Befüllvorrichtung 1 umschlossen ist.

In der Befüllvorrichtung 1 ist weiters eine mit einem Auslass 3a des Druckbehälters 3 verbindbare Ventileinheit 5 vorgesehen. Über die Ventileinheit 5 kann eine dem Fahrzeug F vom Druckbehälter 3 zugeführte Kältemittelmenge des Kühlmittels K gesteuert werden. Im einfachsten Fall kann die Ventileinheit 5 manuell ausgeführt sein und beispielsweise von einem Benutzer manuell bedient werden. Vorzugsweise umfasst die Ventileinheit 5 allerdings ein ansteuerbares Stellglied, z.B. ein elektrisch ansteuerbares Servoventil, das über eine Steuerungseinheit 6 steuerbar ist. Die Steuerungseinheit 6 kann dabei ein Teil der Befüllvorrichtung 1 sein, wie in Fig.1 angedeutet ist. Grundsätzlich könnte aber auch lediglich eine geeignete Schnittstelle 7 in der Befüllvorrichtung 1 vorgesehen sein, beispielsweise am Gehäuse 4, über die die Ventileinheit 5 mit einer externen Steuerungseinheit 8, z.B. einem Computer, verbindbar ist.

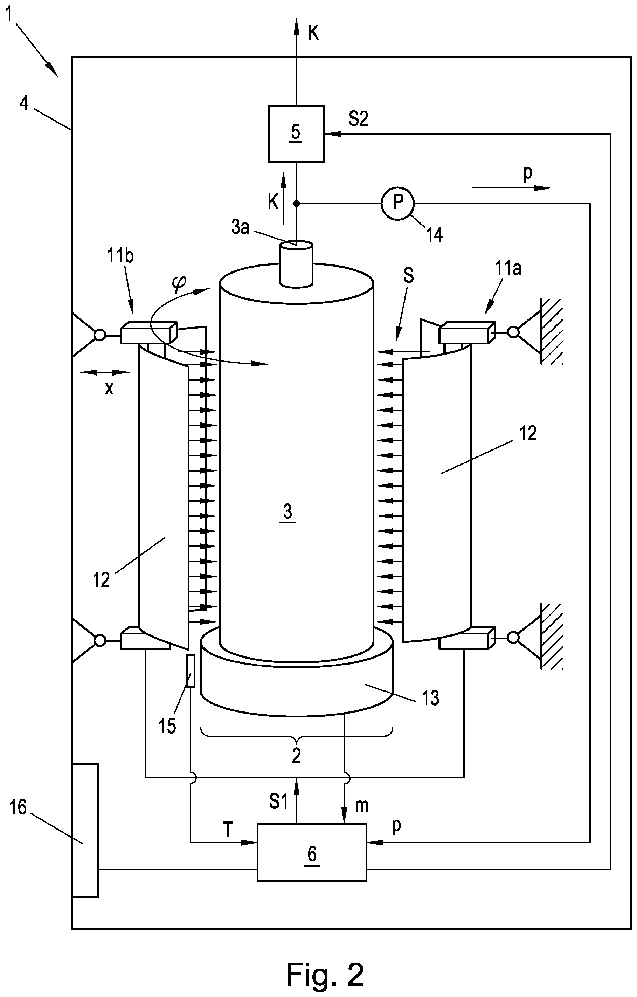

Weiters ist in der Befüllvorrichtung 1 eine Heizeinrichtung 9 zum Erhitzen des Druckbehälters 3 vorgesehen. Wie eingangs erwähnt wurde, wurde als Heizeinrichtung 9 bisher eine Heizmatte verwendet, die um den Umfang des Druckbehälters 3 herum auf die Oberfläche des Druckbehälters angelegt wurde. Die Heizmatte ist in Fig.1 beispielhaft angedeutet und kann beispielsweise eine Anzahl von Heizwendeln 9a umfassen, von einer geeigneten Energiequelle 10, beispielsweise einer herkömmlichen Haushaltssteckdose, mit der nötigen Energie versorgt werden kann. Wie eingangs erwähnt wurde, ergeben sich durch die Verwendung der Heizmatte aber einige Nachteile. Gemäß der Erfindung ist daher vorgesehen, dass die Heizeinrichtung 9 stattdessen zumindest eine Infrarot-Heizeinheit 11 aufweist, um den Druckbehälter 3 berührungslos zu erhitzen. Eine vorteilhafte Ausführungsform der erfindungsgemäßen Befüllvorrichtung 1 wird nachfolgend anhand von Fig.2 näher erläutert.

Die in Fig.2 dargestellte Befüllvorrichtung 1 weist wiederum ein Gehäuse 4 auf, in dem ein Aufnahmebereich 2 für einen Druckbehälter 3 sowie eine mit dem Auslass 3a des Druckbehälters 3 verbindbare Ventileinheit 5 auf. In vorteilhafter Weise sind in der Befüllvorrichtung 1 mehrere Infrarot-Heizeinheiten 11 vorgesehen, die vorzugsweise um einen Umfang des Aufnahmebereichs 2 verteilt angeordnet sind. Im dargestellten Beispiel weist die Heizeinrichtung 9 zwei Infrarot-Heizeinheiten 11a, 11b auf, die im Wesentlichen gegenüberliegend am Umfang des Aufnahmebereichs 2 angeordnet sind. Wie in Fig.2 angedeutet, erzeugen die Infrarot-Heizeinheiten 11a, 11b Wärmestrahlung S, die auf die Oberfläche des Druckbehälters 3 gerichtet ist und den Druckbehälter 3 erwärmt. Die gegenüberliegende Anordnung der Infrarot-Heizeinheiten 11a, 11b hat beispielsweise den Vorteil, dass der Druckbehälter 3 von der Seite, im Wesentlichen horizontal, in den Aufnahmebereich 2 eingebracht werden kann. Dies ist insbesondere bei Druckbehältern 3 mit relativ großer Füllmenge im Bereich von 20I oder mehr vorteilhaft, da diese, insbesondere im vollen Zustand, ein relativ hohes Gewicht aufweisen. Im Gehäuse 4 kann dazu beispielsweise eine geeignete (nicht dargestellte) Öffnung vorgesehen sein, durch die der Druckbehälter in den Aufnahmebereich 2 eingebracht werden kann. Die Öffnung könnte beispielsweise auch durch eine Abdeckung oder eine Tür verschließbar sein. Wenn am Umfang des Aufnahmebereichs 2 zusätzliche weitere Infrarot-Heizeinheiten 11 vorgesehen sind, dann könnte die Einbringung des Druckbehälters 3 in den Aufnahmebereich 2 aber beispielsweise auch von oben erfolgen.

Die Infrarot-Heizeinheiten 11a, 11b können beispielsweise länglich ausgebildet sein und so in der Befüllvorrichtung 1 angeordnet sein, dass ihre Längsachsen im Wesentlichen parallel zu einer Hochachse eines im Aufnahmebereich 2 angeordneten Druckbehälters 3 verlaufen, wie in Fig.2 angedeutet ist. Vorzugsweise ist der Aufnahmebereich 2 zur Aufnahme von Druckbehältern 3 mit einem zylindrischen Flaschenkörper mit einem Flaschendurchmesser von 15cm bis 40cm ausgebildet. Dadurch können gängige genormte Druckflaschen verwendet werden. Insbesondere bei Verwendung von Druckbehältern 3 mit relativ geringem Durchmesser im Verhältnis zur Höhe (und damit relativ hohem Schwerpunkt) kann es weiters vorteilhaft sein, wenn der Aufnahmebereich 2 so ausgebildet ist, dass der darin angeordnete Druckbehälter 3 gegen Umfallen gesichert ist. Dazu kann beispielsweise eine geeignete (nicht dargestellte) Fangeinrichtung vorgesehen sein, die den Druckbehälter 3 gegen unerwünschtes Kippen sichert. Denkbar wäre beispielsweise eine vorzugsweise verschwenkbare Verstrebung im Bereich zwischen den Infrarot-Heizeinheiten 11a, 11b oder ein oder mehrere vorzugsweise wiederverschließbare Gurte. Wenn eine nachfolgend noch näher beschriebene Waage 13 im Aufnahmebereich 2 vorgesehen ist, dann sollte eine allfällig vorhandene Fangeinrichtung jedenfalls so ausgebildet sein, dass ein Umfallen des Druckbehälters 3 zuverlässig verhindert wird, dass der Druckbehälter 3 aber trotzdem ausreichend frei auf der Waage 13 steht, sodass eine möglichst genaue Messung des Gewichts möglich ist.

An einer dem Aufnahmebereich 2 abgewandten Seite der Infrarot-Heizeinheiten 11a, 11b ist hier jeweils eine Abschirmeinheit 12 vorgesehen. Dadurch kann einerseits die Effizienz der Heizung erhöht werden, da die von den Infrarot-Heizeinheiten 11a, 11b erzeugte Wärmestrahlung S besser in Richtung des Druckbehälters 3 geleitet werden kann. Dadurch kann ein möglichst großer Teil der Oberfläche des Druckbehälters 3 von der Wärmestrahlung S erfasst werden. Dabei kann es vorteilhaft sein, wenn die Abschirmeinheit 12 die jeweilige Infrarot-Heizeinheit 11a, 11b in Umfangsrichtung z.B. zumindest zur Hälfte umgibt. Um eine gleichmäßige Bestrahlung der Oberfläche des Druckbehälters 3 zu gewährleisten, können die Abschirmeinheiten 12 beispielsweise parabolisch geformt sein und die Infrarot-Heizeinheiten 11a, 11b können im jeweiligen Brennpunkt der parabolischen Abschirmeinheit 12 angeordnet sein.

Neben der gerichteten Verteilung der Wärmestrahlung S kann durch die Abschirmeinheiten 12 auch die Wärmeübertragung auf die anderen Teile der Befüllvorrichtung 1 vermieden oder zumindest verringert werden. Dadurch können empfindliche Komponenten, wie z.B. die Steuerungseinheit 6, elektrische, pneumatische oder hydraulische Leitungen vor Überhitzung geschützt werden. Die Abschirmeinheiten 12 sind vorzugsweise aus einem ausreichend temperaturfesten Material ausgebildet, beispielsweise aus einem geeigneten Metall und/oder Kunststoff. Metall hat dabei den Vorteil, dass ein relativ großer Teil der Wärmestrahlung S reflektiert und in Richtung des Druckbehälters 3 gerichtet werden kann. Kunststoff wiederum hat den Vorteil der geringeren Wärmeleitfähigkeit, woraus eine geringere Wärmeabstrahlung in Richtung der übrigen Komponenten der Befüllvorrichtung 1 resultiert.

Es wäre daher beispielsweise auch denkbar, dass die Abschirmeinheiten 12 aus einem geeigneten Kunststoff ausgebildet sind und dass lediglich die, dem Aufnahmebereich 2 zugewandte Innenseite, mit einem geeigneten Metall beschichtet ist, um die Wärmestrahlung S möglichst gut zu reflektieren. Die Art und konstruktive Ausgestaltung der Abschirmeinheit 12 richtet sich natürlich nach der Anzahl und der konstruktiven Ausführung der Infrarot-Heizeinheiten 11. Für eine besonders gute Wärme-Isolierung wäre es auch denkbar, dass um den Aufnahmebereich 2 und die Infrarot-Heizeinheiten 11a, 11b herum zusätzlich ein wärmeisolierendes Material angeordnet wird. Beispielsweise könnte eine Innenseite des Gehäuses 4 mit einem geeigneten isolierenden Material ausgekleidet sein. Gleichfalls wäre es denkbar, dass allfällige Leitungen (elektrisch, hydraulisch, pneumatisch) durch Vorsehen einer Isolierung gegen übermäßige Erwärmung geschützt werden.

Gemäß einer vorteilhaften Ausführungsform können die Infrarot-Heizeinheiten 11a, 11b relativ zum Aufnahmebereich 2 translatorisch oder rotatorisch beweglich in der Befüllvorrichtung 1 angeordnet sein. Dadurch können z.B. eine Position X und/oder ein Winkel ϕ der jeweiligen Infrarot-Heizeinheit 11a, 11b relativ zum Aufnahmebereich 2 bzw. dem Druckbehälter 3 verstellt werden. Auch eine Höhenverstellung wäre natürlich denkbar. Die Verstellbarkeit ist beispielsweise bei Verwendung von Druckbehältern 3 mit verschiedenen Durchmessern vorteilhaft, um einen Abstand zwischen den Infrarot-Heizeinheiten 11a, 11b und dem Druckbehälter 3 einstellen zu können. Die Abschirmeinheiten 12 könnten natürlich ebenfalls beweglich angeordnet sein. Beispielsweise könnten die Abschirmeinheiten 12 fest an den Infrarot-Heizeinheiten 11a, 11b angeordnet sein und gemeinsam mit den Infrarot-Heizeinheiten 11a, 11b bewegbar sein. Die Abschirmeinheiten 12 könnten aber auch am Gehäuse 4 befestigt sein und relativ zu den Infrarot-Heizeinheiten 11a, 11b beweglich angeordnet sein.

Die dargestellte Ausführung mit zwei Infrarot-Heizeinheiten 11a, 11b ist natürlich nur beispielhaft und es könnten im Rahmen der Erfindung natürlich auch mehr oder weniger als zwei Infrarot-Heizeinheiten 11 vorgesehen sein. Beispielsweise könnte es bei Druckbehältern 3 mit relativ großem Durchmesser vorteilhaft sein, wenn mehr als zwei Infrarot-Heizeinheiten 11a, 11b am Umfang des Aufnahmebereichs 2 verteilt vorgesehen sind, z.B. drei bis acht Infrarot-Heizeinheiten 11.

Für eine besonders effiziente Erhitzung des Druckbehälters 3 kann es weiters vorteilhaft sein, wenn eine Oberfläche des Druckbehälters 3 z.B. durch einen geeigneten Lack, beispielsweise Heizkörperlack, beschichtet ist. Die Oberfläche sollte dabei einen möglichst hohen Absorptionskoeffizienten im Infrarot-Bereich aufweisen. Der Absorptionskoeffizient ist auch von der Wellenlänge der Infrarotstrahlung abhängig und beträgt vorzugsweise 0,9 bis 1, vorzugsweise 0,95 bis 1 im Bereich, in dem das Maximum der Infrarotstrahlung liegt. Dadurch kann z.B. der Nachteil zumindest teilweise behoben werden, dass Metalle IR-Strahlung nur im Nahinfrarotbereich-Bereich (NIR) im Bereich von ca. 800-1400nm absorbieren und längere Wellenlängen vor allem reflektieren. Alternativ oder zusätzlich könnte auch eine Lampe der Infrarot-Heizeinheiten 11 selbst angepasst werden, beispielsweise durch Verwendung von Quarz-Wolfram-Lampen, die im NIR-Bereich emittieren, statt der gebräuchlicheren Keramik-Lampen. Weiters wäre es denkbar, dass für den NIR-Bereich zusätzlich zur zumindest einen Infrarot-Heizeinheit 11 ein oder mehrere geeignete LED-Strahler verwendet werden.

In der Befüllvorrichtung 1 ist weiters eine Steuerungseinheit 6 zur Steuerung der Befüllvorrichtung 1 vorgesehen, über die der Befüllvorgang gesteuert werden kann. Die Steuerungseinheit 6 ist dazu zumindest mit der Ventileinheit 5 verbunden und dazu ausgebildet, die Ventileinheit 5 anzusteuern, um eine Kältemittelmenge des vom Druckbehälter 3 abgegebenen und dem Fahrzeug F zuführbaren Kältemittels K steuern. Gemäß einer vorteilhaften Ausführungsform ist die Steuerungseinheit 6 zudem auch mit der Heizeinrichtung 9, insbesondere mit den Infrarot-Heizeinheiten 11a, 11b, verbunden, sodass die Heizeinrichtung 9 über die Steuerungseinheit 6 aktiviert bzw. deaktiviert werden kann und z.B. auch die Heizleistung der Infrarot-Heizeinheiten 11a, 11b, vorzugsweise variabel, gesteuert werden kann.

Im Aufnahmebereich 2 der Befüllvorrichtung 1 ist vorzugsweise auch eine Waage 13 zur Messung eines Gewichts des Druckbehälters 3 vorgesehen, die in geeigneter Weise mit der Steuerungseinheit 6 kommuniziert. Dadurch kann während eines Befüllvorgangs eine vorgegebene Füllmenge an die Klimaanlage des Fahrzeugs F angegeben werden, indem die Steuerungseinheit 6 die Ventileinheit 5 in Abhängigkeit eines Messwerts m der Waage steuert. Dazu kann beispielsweise das erfasste Gewicht m des Druckbehälters 3 vor dem Start des Befüllvorgangs als Initialgewicht m0 verwendet werden und es könnte der Steuerungseinheit 6 eine gewünschte Füllmenge in Form eines Füllgewichts mF vorgegeben werden. Die Steuerungseinheit 6 kann die Ventileinheit 5 dann so lange geöffnet halten, bis das erfasste Gewicht m des Druckbehälters 3 dem Initialgewicht m0 abzüglich des Füllgewichts mF entspricht. Alternativ oder zusätzlich zur Waage 13 könnte auch eine andere Form der Messung der Füllmenge, insbesondere des Füllgewichts, erfolgen. Beispielsweise könnte in der Befüllvorrichtung 1, die beispielsweise im Bereich der Ventileinheit 5, eine geeignete (nicht dargestellte) Durchflussmesseinrichtung vorgesehen sein, die eine Durchflussmenge (Volumenstrom oder Massenstrom) erfasst. Die Steuerungseinheit 6 könnte die Ventileinheit 5 auf Basis der erfassten Durchflussmenge steuern, um die zugeführte Füllmenge einzustellen.

Weiters können in der Befüllvorrichtung 1 zumindest ein Drucksensor 14 zur Erfassung eines Drucks p des Kältemittels K und/oder zumindest ein Temperatursensor 15 zur Erfassung einer Temperatur T des Kältemittels K und/oder des Druckbehälters 3 und/oder der Heizeinrichtung 9 vorgesehen sein. Der Drucksensor 14 kann beispielsweise zwischen dem Auslass 3a des Druckbehälters 3 und der Ventileinheit 5 angeordnet sein und in geeigneter Weise mit der Steuerungseinheit 6 kommunizieren. Der Temperatursensor 15 kann beispielsweise als Infrator-Sensor ausgebildet sein, um eine Oberflächentemperatur des Druckbehälters 3 zu messen und kann ebenfalls in geeigneter Weise mit der Steuerungseinheit 6 kommunizieren. Natürlich können auch jeweils mehrere Temperatursensoren 15 oder Drucksensoren 14 vorgesehen sein und auch andere Arten von Sensoren wären denkbar.

Die Die Steuerungseinheit 6 kann die erfassten Sensorwerte p, T zur Steuerung oder Regelung der Heizeinrichtung 9 und ggf. auch der Ventileinheit 5 verwenden. Dazu kann auch ein geeigneter Regler, z.B. Pl- oder PID-Regler, in der Steuerungseinheit 6 integriert sein. Der Regler kann z.B. aus einer vorgegebenen Sollgröße, z.B. einer Soll-Temperatur oder eines Soll-Drucks, und aus den erfassten Sensorwerten p, T eine Stellgröße S1 zur Steuerung der Heizeinrichtung 9 und ggf. eine Stellgröße S2 zur Steuerung der Ventileinheit 5 ermitteln. Die Steuerungseinheit 6 kann die Heizeinrichtung 9 und ggf. die Ventileinheit 5 mit den Stellgrößen S1, S2 steuern, um die vorgegebenen Sollgrößen einzuregeln. Die Ansteuerung der Heizeinrichtung 9 kann beispielsweise auch zyklisch erfolgen (an/aus). Beispielsweise kann auch eine Maximaltemperatur vorgegeben werden und die Steuerungseinheit 6 kann die Heizeinrichtung 9 entsprechend ansteuern, sodass die Maximaltemperatur nicht überschritten wird.

In vorteilhafter Weise kann in der Befüllvorrichtung 1 auch eine mit der Steuerungseinheit 6 verbundene Benutzerschnittstelle 16 vorgesehen sein, über welche Steuerungsparameter des Befüllvorgangs einstellbar sind. Über die Benutzerschnittstelle 16 kann ein Benutzer beispielsweise eine bestimmte Füllmenge oder Fülldauer einstellen, die dann automatisch dem Fahrzeug F zugeführt wird. Die Benutzerschnittstelle 16 kann dazu auch eine Bedieneinheit aufweisen, die z.B. Bedientasten, Schieberegler oder einen Touchscreen umfassen kann. Die Benutzerschnittstelle 16 könnte aber auch ohne Bedieneinheit ausgeführt sein und z.B. lediglich zur Anbindung eines externen Computers ausgebildet sein. Der Befüllvorgang könnte dann über den externen Computer gesteuert werden.

Eine Befüllvorrichtung 1 wird in der Regel in Werkstätten zur Befüllung mehrerer Fahrzeuge F verwendet, die an verschiedenen Standorten stehen können. Es kann daher vorteilhaft sein, wenn die Befüllvorrichtung 1 als mobile Befüllvorrichtung ausgebildet ist. Dazu können an einer Unterseite der Befüllvorrichtung 1 Räder angeordnet sein, um die Befüllvorrichtung 1 manuell verschieben zu können. Für einen energieautarken Betrieb der Befüllvorrichtung 1 könnte in der Befüllvorrichtung 1 beispielsweise auch ein geeigneter (nicht dargestellter) Energiespeicher, beispielsweise ein elektrischer Akku, vorgesehen sein. Dadurch könnten ein oder mehrere Befüllvorgänge ohne externe Energieversorgung durchgeführt werden.

## Patentansprüche

1. Befüllvorrichtung (1) zur Durchführung eines Befüllvorgangs einer Klimaanlage eines Fahrzeugs (F) mit einem Kältemittel (K), wobei in der Befüllvorrichtung (1) ein Aufnahmebereich (2) zur Aufnahme eines mit dem Kältemittel (K) gefüllten Druckbehälters (3), eine mit einem Auslass (3a) des Druckbehälters (3) verbindbare Ventileinheit (5) zum Steuern einer dem Fahrzeug (F) zuführbaren Kältemittelmenge und eine Heizeinrichtung (9) zum Erhitzen des Druckbehälters (3) vorgesehen sind, **dadurch gekennzeichnet, dass** die Heizeinrichtung (9) zumindest ein Infrarot-Heizeinheit (11) aufweist, um den Druckbehälter (3) berührungslos zu erhitzen.

2. Befüllvorrichtung (1) nach Anspruch 1, **dadurch gekennzeichnet, dass** in der Befüllvorrichtung (1) eine Steuerungseinheit (6) zur Steuerung des Befüllvorgangs vorgesehen ist **und/oder dass** im Aufnahmebereich (2) eine Waage (13) zur Messung eines Gewichts des Druckbehälters (3) vorgesehen ist.

3. Befüllvorrichtung (1) nach einem der Ansprüche 1 bis 2, **dadurch gekennzeichnet, dass** in der Befüllvorrichtung (1) zumindest ein Drucksensor (14) zur Erfassung eines Drucks (p) des Kältemittels (K) vorgesehen ist und/oder dass in der Befüllvorrichtung (1) zumindest ein Temperatursensor (15) zur Erfassung einer Temperatur (T) des Druckbehälters (3) und/oder der Heizeinrichtung (9) und/oder des Kältemittels (K) vorgesehen ist.

4. Befüllvorrichtung (1) nach einem der Ansprüche 1 bis 3, **dadurch gekennzeichnet, dass** in der Befüllvorrichtung (1) mehrere Infrarot-Heizeinheiten (11a, 11b) vorgesehen sind, die vorzugsweise um einen Umfang des Aufnahmebereichs (2) verteilt angeordnet sind **und/oder dass** in der Befüllvorrichtung (1), an einer dem Aufnahmebereich (2) abgewandten Seite zumindest einer Infrarot-Heizeinheit (11a, 11b)), eine Abschirmeinheit (12) vorgesehen ist, wobei die Abschirmeinheit (12) die Infrarot-Heizeinheit (11a, 11b) in Umfangsrichtung vorzugsweise zumindest zur Hälfte umgibt.

5. Befüllvorrichtung (1) nach einem der Ansprüche 1 bis 4, **dadurch gekennzeichnet, dass** zumindest eine Infrarot-Heizeinheit (11a, 11b) länglich ausgebildet und so in der Befüllvorrichtung (1) angeordnet ist, dass seine Längsachse parallel zu einer Hochachse eines im Aufnahmebereich (2) stehend angeordneten Druckbehälters (3) verläuft.

6. Befüllvorrichtung (1) nach einem der Ansprüche 2 bis 5, **dadurch gekennzeichnet, dass** an der Befüllvorrichtung (1) eine mit der Steuerungseinheit (6) verbundene Benutzerschnittstelle (16) vorgesehen ist, über welche Steuerungsparameter des Befüllvorgangs einstellbar sind, insbesondere eine der Klimaanlage zuführbare Kältemittelmenge und/oder eine Fülldauer.

7. Befüllvorrichtung (1) nach einem der Ansprüche 1 bis 6, **dadurch gekennzeichnet, dass** die Befüllvorrichtung (1) als mobile Befüllvorrichtung (1) ausgebildet ist, wobei an einer Unterseite der Befüllvorrichtung (1) Räder angeordnet sind und/oder wobei in der Befüllvorrichtung (1) vorzugsweise ein Energiespeicher vorgesehen ist, um die Befüllvorrichtung (1) zur Durchführung zumindest eines Befüllvorgangs mit Energie zu versorgen.

8. Befüllvorrichtung (1) nach einem der Ansprüche 1 bis 7 **dadurch gekennzeichnet, dass** zumindest eine Infrarot-Heizeinheit (11a, 11b) relativ zum Aufnahmebereich (2) translatorisch und/oder rotatorisch beweglich angeordnet ist **und/oder dass** der Aufnahmebereich (2) zur Aufnahme von Druckbehältern (3) mit einem zylindrischen Flaschenkörper mit einem Flaschendurchmesser von 15cm bis 40cm ausgebildet ist.

9. Verfahren zur Durchführung eines Befüllvorgangs einer Klimaanlage eines Fahrzeugs (F) mit einem Kältemittel (K), wobei das Kältemittel (K) dem Fahrzeug (F) aus einem Druckbehälter (3) zugeführt wird, wobei eine zugeführte Kältemittelmenge über eine mit einem Auslass (3a) des Druckbehälters (3) verbundene Ventileinheit (5) gesteuert wird und wobei der Druckbehälter (3) erhitzt wird, um einen Druck (p) im Druckbehälter (3) zu erhöhen, **dadurch gekennzeichnet, dass** der Druckbehälter (3) mittels zumindest einer Infrarot-Heizeinheit (11) berührungslos erhitzt wird.

10. Verfahren nach Anspruch 9, **dadurch gekennzeichnet, dass** als Kältemittel (K) Kohlendioxid verwendet wird.

11. Verfahren nach Anspruch 9 oder 10, **dadurch gekennzeichnet, dass** der Befüllvorgang mittels einer Steuerungseinheit (6) gesteuert wird **und/oder dass** ein Gewicht (m) des Druckbehälters (3) während des Befüllvorgangs gemessen wird und dass anhand des gemessenen Gewichts (m) die zugeführte Kältemittelmenge gesteuert wird.

12. Verfahren nach einem der Ansprüche 9 bis 10, **dadurch gekennzeichnet, dass** ein Druck (p) des Kältemittels (K) erfasst wird und/oder dass eine Temperatur im Bereich des Druckbehälters (3) und/oder im Bereich der zumindest einen Infrarot-Heizeinheit (11) und/oder des Kältemittels (K) erfasst wird und dass die zumindest eine Infrarot-Heizeinheit (11) und/oder die Ventileinheit (5) in Abhängigkeit des erfassten Drucks (p) und/oder der erfassten Temperatur (T) gesteuert werden.

13. Verfahren nach einem der Ansprüche 9 bis 12, **dadurch gekennzeichnet, dass** der Druckbehälter (3) mittels mehrerer Infrarot-Heizeinheiten (11a, 11b) erhitzt wird, die vorzugsweise um einen Umfang des Druckbehälters (3) verteilt angeordnet werden **und/oder dass** eine dem Druckbehälter (3) abgewandte Seite zumindest einer Infrarot-Heizeinheit (11a, 11b) mittels einer Abschirmeinheit (12) abgeschirmt wird, wobei die Abschirmeinheit (12) die Infrarot-Heizeinheit (11a, 11b) in Umfangsrichtung vorzugsweise zumindest zur Hälfte umgibt.

14. Verfahren nach einem der Ansprüche 11 bis 13, **dadurch gekennzeichnet, dass** über eine mit der Steuerungseinheit (6) verbundene Benutzerschnittstelle (16) zumindest ein Steuerungsparameter des Befüllvorgangs eingestellt wird, vorzugsweise die zugeführte Kältemittelmenge und/oder eine Fülldauer des Befüllvorgangs.

15. Verfahren nach einem der Ansprüche 9 bis 14, **dadurch gekennzeichnet, dass** ein Abstand (X) und/oder ein Winkel (ϕ) zwischen zumindest einer Infrarot-Heizeinheit (11a, 11b) und dem Druckbehälter (3) verändert werden.

## Claims

1. A filling device (1) for carrying out a filling process an air conditioning system of a vehicle (F) with a refrigerant (K), wherein in the filling device (1) there are provided a receiving region (2) for receiving a pressure container (3) filled with a refrigerant (K), a valve unit (5) being connected to an outlet (3a) of the pressure container (3) for controlling a quantity of the refrigerant being supplied to the vehicle (F), and a heating device (9) for heating the pressure container (3), **characterized in that** the heating device (9) has at least one infrared heating unit (11) to heat the pressure container (3) without any contact.

2. The filling device (1) according to claim 1, **characterized in that** a control unit (6) for controlling the filling process is provided in the filling device (1) **and/or in that** a scale (13) for measuring a weight of the pressure container (3) is provided in the receiving region (2).

3. The filling device (1) according to any one of claims 1 to 2, **characterized in that** at least one pressure sensor (14) for detecting a pressure (p) of the refrigerant (K) is provided in the filling device (1), and/or **in that** at least one temperature sensor (15) for detecting a temperature (T) of the pressure container (3) and/or of the heating device (9) and/or of the refrigerant (K) is provided in the filling device (1).

4. The filling device (1) according to any one of claims 1 to 3, **characterized in that** a plurality of infrared heating units (11a, 11b) is provided in the filling device (1), which are preferably arranged distributed around a circumference of the receiving region (2) **and/or in that** a shielding unit (12) is provided in the filling device (1) on a side of at least one infrared heating unit (11a, 11b) facing away from the receiving region (2), the shielding unit (12) preferably surrounding the infrared heating unit (11a, 11b) at least halfway in the circumferential direction.

5. The filling device (1) according to any one of claims 1 to 4, **characterized in that** at least one infrared heating unit (11a, 11b) is of elongated shape and is arranged in the filling device (1) in such a way that its longitudinal axis runs in parallel to a vertical axis of a pressure container (3) arranged upright in the receiving region (2).

6. The filling device (1) according to any one of claims 2 to 5, **characterized in that** a user interface (16) connected to the control unit (6) is provided on the filling device (1), via which user interface control parameters of the filling process can be set, in particular a quantity of the refrigerant being supplied to the air conditioning system and/or a filling duration.

7. The filling device (1) according to any one of claims 1 to 6, **characterized in that** the filling device (1) is designed as a mobile filling device (1), wherein wheels are arranged on an underside of the filling device (1) and/or wherein an energy storage is preferably provided in the filling device (1) to supply energy to the filling device (1) for carrying out at least one filling process.

8. The filling device (1) according to any one of claims 1 to 7, **characterized in that** at least one infrared heating unit (11a, 11b) is arranged being translationally and/or rotationally movable relative to the receiving region (2) **and/or in that** the receiving region (2) is designed to receive pressure containers (3) having a cylindrical bottle body with a bottle diameter of 15 cm to 40 cm.

9. A method for carrying out a filling process of an air conditioning system of a vehicle (F) with a refrigerant (K), wherein the refrigerant (K) is supplied to the vehicle (F) from a pressure container (3), wherein a supplied quantity of the refrigerant is controlled via a valve unit (5) connected to an outlet (3a) of the pressure container (3), and wherein the pressure container (3) is heated to increase a pressure (p) in the pressure container (3), **characterized in that** the pressure container (3) is heated by at least one infrared heating unit (11) without any contact.

10. The method according to claim 9, **characterized in that** carbon dioxide is used as refrigerant (K).

11. The method according to claim 9 or 10, **characterized in that** the filling process is controlled by a control unit (6) **and/or in that** a weight (m) of the pressure container (3) is measured during the filling process and **in that** the supplied quantity of the refrigerant is controlled on the basis of the measured weight (m).

12. The method according to any one of claims 9 to 10, **characterized in that** a pressure (p) of the refrigerant is detected and/or **in that** a temperature in the region of the pressure container (3) and/or in the region of the at least one infrared heating unit (11) and/or of the refrigerant (K) is detected, and **in that** the at least one infrared heating unit (11) and/or the valve unit (5) are controlled depending on the detected pressure (p) and/or the detected temperature (T).

13. The method according to any one of claims 9 to 12, **characterized in that** the pressure container (3) is heated by a plurality of infrared heating units (11a, 11b), which are preferably arranged distributed around a circumference of the pressure container (3), **and/or in that** a side of at least one infrared heating unit (11a, 11b) facing away from the pressure container (3) is shielded by a shielding unit (12), wherein the shielding unit (12) preferably surrounds the infrared heating unit (11a, 11b) at least halfway in the circumferential direction.

14. The method according to any one of claims 11 to 13, **characterized in that** at least one control parameter of the filling process is set via a user interface (16) connected to the control unit (6), preferably the supplied quantity of the refrigerant and/or a filling duration of the filling process.

15. The method according to any one of claims 9 to 14, **characterized in that** a distance (X) and/or an angle (ϕ) between at least one infrared heating unit (11a, 11b) and the pressure container (3) are changed.

## Revendications

1. Dispositif de remplissage (1) permettant de réaliser un processus de remplissage d'un système de climatisation d'un véhicule (F) avec un réfrigérant (K), dans lequel une zone de réception (2) permettant de recevoir un récipient sous pression (3) rempli du réfrigérant (K), une unité à soupape (5) pouvant être reliée à une sortie (3a) du récipient sous pression (3) et permettant de commander une quantité de réfrigérant pouvant être amenée au véhicule (F), et un appareil de chauffage (9) permettant de chauffer le récipient sous pression (3) sont prévus dans le dispositif de remplissage (1), **caractérisé en ce que** l'appareil de chauffage (9) présente au moins une unité de chauffage infrarouge (11) afin de chauffer le récipient sous pression (3) sans contact.

2. Dispositif de remplissage (1) selon la revendication 1,
**caractérisé en ce qu'**une unité de commande (6) permettant de commander le processus de remplissage est prévue dans le dispositif de remplissage (1) **et/ou en ce qu'**une balance (13) permettant de mesurer un poids du récipient sous pression (3) est prévue dans la zone de réception (2).

3. Dispositif de remplissage (1) selon l'une des revendications 1 à 2, **caractérisé en ce qu'**au moins un capteur de pression (14) permettant de détecter une pression (p) du réfrigérant (K) est prévu dans le dispositif de remplissage (1) **et/ou en ce qu'**au moins un capteur de température (15) permettant de détecter une température (T) du récipient sous pression (3) et/ou de l'appareil de chauffage (9) et/ou du réfrigérant (K) est prévu dans le dispositif de remplissage (1).

4. Dispositif de remplissage (1) selon l'une des revendications 1 à 3, **caractérisé en ce que** plusieurs unités de chauffage infrarouge (11a, 11b), lesquelles sont de préférence disposées de manière à être réparties autour d'une périphérie de la zone de réception (2), sont prévues dans le dispositif de remplissage (1) **et/ou en ce que,** sur un côté opposé à la zone de réception (2) d'au moins une unité de chauffage infrarouge (11a, 11b), une unité de protection (12) est prévue dans le dispositif de remplissage (1), dans lequel l'unité de protection (12) entoure de préférence au moins la moitié de l'unité de chauffage infrarouge (11a, 11b) dans la direction périphérique.

5. Dispositif de remplissage (1) selon l'une des revendications 1 à 4, **caractérisé en ce qu'**au moins une unité de chauffage infrarouge (11a, 11b) est réalisée sous forme allongée et est disposée dans le dispositif de remplissage (1) de sorte que son axe longitudinal s'étend parallèlement à un axe vertical d'un récipient sous pression (3) disposé debout dans la zone de réception (2).

6. Dispositif de remplissage (1) selon l'une des revendications 2 à 5, **caractérisé en ce qu'**une interface utilisateur (16) connectée à l'unité de commande (6) est prévue sur le dispositif de remplissage (1), par l'intermédiaire de laquelle interface utilisateur des paramètres de commande du processus de remplissage peuvent être réglés, en particulier une quantité de réfrigérant pouvant être amenée au système de climatisation et/ou une durée de remplissage.

7. Dispositif de remplissage (1) selon l'une des revendications 1 à 6, **caractérisé en ce que** le dispositif de remplissage (1) est réalisé comme un dispositif de remplissage (1) mobile, dans lequel des roues sont disposées sur un côté inférieur du dispositif de remplissage (1) et/ou dans lequel un accumulateur d'énergie est de préférence prévu dans le dispositif de remplissage (1) afin d'alimenter en énergie le dispositif de remplissage (1) pour réaliser au moins un processus de remplissage.

8. Dispositif de remplissage (1) selon l'une des revendications 1 à 7 **caractérisé en ce qu'**au moins une unité de chauffage infrarouge (11a, 11b) est disposée de manière à pouvoir se déplacer en translation et/ou en rotation par rapport à la zone de réception (2) **et/ou en ce que** la zone de réception (2) est réalisée pour recevoir des récipients sous pression (3) comportant un corps de bouteille cylindrique d'un diamètre de bouteille allant de 15 cm à 40 cm.

9. Procédé permettant de réaliser un processus de remplissage d'un système de climatisation d'un véhicule (F) avec un réfrigérant (K), dans lequel le réfrigérant (K) est amené au véhicule (F) à partir d'un récipient sous pression (3), dans lequel une quantité de réfrigérant amenée est commandée par l'intermédiaire d'une unité à soupape (5) reliée à une sortie (3a) du récipient sous pression (3) et dans lequel le récipient sous pression (3) est chauffé pour augmenter une pression (p) dans le récipient sous pression (3), **caractérisé en ce que** le récipient sous pression (3) est chauffé sans contact au moyen d'au moins une unité de chauffage infrarouge (11).

10. Procédé selon la revendication 9, **caractérisé en ce que** du dioxyde de carbone est utilisé comme réfrigérant (K).

11. Procédé selon la revendication 9 ou 10, **caractérisé en ce que** le processus de remplissage est commandé au moyen d'une unité de commande (6) **et/ou en ce qu'**un poids (m) du récipient sous pression (3) est mesuré pendant le processus de remplissage **et en ce que** la quantité de réfrigérant amenée est commandée à l'aide du poids (m) mesuré.

12. Procédé selon l'une des revendications 9 à 10,
**caractérisé en ce qu'**une pression (p) du réfrigérant (K) est détectée **et/ou en ce qu'**une température est détectée dans la zone du récipient sous pression (3) et/ou dans la zone de l'au moins une unité de chauffage infrarouge (11) et/ou du réfrigérant (K) **et en ce que** l'au moins une unité de chauffage infrarouge (11) et/ou l'unité à soupape (5) sont commandées en fonction de la pression (p) détectée et/ou de la température (T) détectée.

13. Procédé selon l'une des revendications 9 à 12, **caractérisé en ce que** le récipient sous pression (3) est chauffé au moyen de plusieurs unités de chauffage infrarouge (11a, 11b) qui sont de préférence disposées de manière à être réparties autour d'une périphérie du récipient sous pression (3) **et/ou en ce qu'**un côté opposé au récipient sous pression (3) d'au moins une unité de chauffage infrarouge (11a, 11b) est protégé au moyen d'une unité de protection (12), dans lequel l'unité de protection (12) entoure de préférence au moins la moitié de l'unité de chauffage infrarouge (11a, 11b) dans la direction périphérique.

14. Procédé selon l'une des revendications 11 à 13,
**caractérisé en ce qu'au** moins un paramètre de commande du processus de remplissage, de préférence la quantité de réfrigérant amenée et/ou une durée de remplissage du processus de remplissage, est réglé par l'intermédiaire d'une interface utilisateur (16) connectée à l'unité de commande (6).

15. Procédé selon l'une des revendications 9 à 14, **caractérisé en ce qu'**une distance (X) et/ou un angle (ϕ) entre au moins une unité de chauffage infrarouge (11a, 11b) et le récipient sous pression (3) sont modifiés.
